(19) Europäisches Patentamt
European Patent Office
Office européen des brevets

(11) **EP 4 032 817 B1**

(12) **EUROPÄISCHE PATENTSCHRIFT**

(45) Veröffentlichungstag und Bekanntmachung des Hinweises auf die Patenterteilung:
**13.11.2024   Patentblatt 2024/46**

(21) Anmeldenummer: **22150017.6**

(22) Anmeldetag: **03.01.2022**

(51) Internationale Patentklassifikation (IPC):
**B65B 7/16** (2006.01)   **B65B 35/24** (2006.01)
**B65G 47/30** (2006.01)

(52) Gemeinsame Patentklassifikation (CPC):
**B65B 7/16; B65B 35/24; B65G 47/31**

(54) **SIEGELEINRICHTUNG ZUM VERSCHLIESSEN VON VERPACKUNGEN**

SEALING DEVICE FOR SEALING PACKAGES

DISPOSITIF DE SCELLEMENT PERMETTANT DE FERMER DES EMBALLAGES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.01.2021   DE 102021101092**

(43) Veröffentlichungstag der Anmeldung:
**27.07.2022   Patentblatt 2022/30**

(73) Patentinhaber: **MULTIVAC Sepp Haggenmüller SE & Co. KG**
**87787 Wolfertschwenden (DE)**

(72) Erfinder:
• **HÖPNER, Bernd**
  **87437 Kempten (DE)**
• **BUCHBERGER, Peter**
  **87448 Waltenhofen (DE)**
• **JUNG, Patrick**
  **87439 Kempten (DE)**
• **GABLER, Albert**
  **87760 Lachen-Albishofen (DE)**

(74) Vertreter: **Grünecker Patent- und Rechtsanwälte PartG mbB**
**Leopoldstraße 4**
**80802 München (DE)**

(56) Entgegenhaltungen:
**DE-A1- 102006 030 433     DE-A1- 102009 031 516**

**Beschreibung**

Die vorliegende Erfindung betrifft eine Siegeleinrichtung zum Verschließen von Verpackungen gemäß Anspruch 1 sowie ein Verfahren zur Steuerung des Transports von Verpackungen in einer Siegeleinrichtung gemäß Anspruch 9.

**Stand der Technik**

Aus dem Stand der Technik sind Siegeleinrichtungen bekannt. Diese können genutzt werden, um beispielsweise Verpackungsschalen (auch Trays genannt) mit darin eingebrachtem Produkt, wie etwa Wurstscheiben oder Käsescheiben, mit einer Folie zu versiegeln. Dazu wird die Folie in Aufnahmen einer Siegelstation (auch bekannt als Traysealer) der Siegeleinrichtung über den gefüllten Verpackungsschalen positioniert und etwa durch Wärmeeinwirkung mit den Verpackungsschalen verbunden, sodass ein ggf. gasdichtes Verschließen der so hergestellten Verpackungen bewirkt wird.

Die Siegeleinrichtung umfasst üblicherweise auch eine oder mehrere Transporteinrichtungen, die die befüllten Verpackungen der Siegelstation zuführen. Die Transporteinrichtungen können insbesondere als Transportbänder ausgebildet sein.

Aus der DE 10 2006 030 433 A1 ist eine Vorrichtung und ein Verfahren zum Verpacken von gefüllten Schalen mit versiegelter Deckfolie bekannt, wobei die Schalen in einem Abstand auf ein Zuführband gelegt werden, um auf ein Sammelband übergeben zu werden. Ein Sensor im Zuführband registriert die Abmessungen der Verpackungsmulden sowie ihre Länge, sodass die Position der jeweiligen Führungskante bestimmt werden kann.

Aus der EP 0 680 880 B1 ist eine Siegeleinrichtung bekannt, bei der die Verpackungen in unregelmäßigem Abstand auf einem Transportband angelangen und von dort der Siegelstation zugeführt werden. Um eine Übergabe der Verpackungen an die Siegelstation in dem für die Aufnahmen notwendigen Abstand zu gewährleisten, wird ein von dem Transportband unabhängig antreibbares Pufferband zwischen der Siegelstation und dem Transportband vorgesehen. Die Geschwindigkeit des Pufferbandes wird so gesteuert, dass eventuell variierende Abstände der Aufnahmen in dem Transportband ausgeglichen werden, wenn die Verpackungen an die Pufferstation übergeben werden.

Das Pufferband kann jedoch nur begrenzt beschleunigt und abgebremst werden, ohne die korrekte Ausrichtung der Aufnahmen auf dem Pufferband zu gefährden. Außerdem erfordert die Anpassung der Geschwindigkeit des Pufferbandes und die begrenzte Möglichkeit der Beschleunigung eine gewisse Zeit, um die notwendige Geschwindigkeit zum Ausgleichen variierender Abstände der Verpackungen in dem Transportband zu erreichen. Dies kann bei größeren Lücken zwischen den Verpackungen im Transportband dazu führen, dass der Betrieb des Pufferbandes entweder nicht prozessstabil gewährleistet werden kann, oder einige Siegelstationen nicht befüllt werden können.

**Aufgabe**

Ausgehend vom bekannten Stand der Technik besteht die zu lösende technische Aufgabe somit darin, eine Siegeleinrichtung und ein Verfahren zur Steuerung des Transports von Verpackungen in einer Siegeleinrichtung anzugeben, mit denen ein zuverlässiger Betrieb der Siegeleinrichtung auch bei größeren Lücken zwischen Verpackungen im Zustrom zur Siegelstation gewährleistet werden kann.

**Lösung**

Diese Aufgabe wird erfindungsgemäß durch die Siegeleinrichtung zum Verschließen von Verpackungen gemäß Anspruch 1 und das Verfahren zur Steuerung des Transports von Verpackungen in einer Siegeleinrichtung gemäß Anspruch 9 gelöst. Vorteilhafte Weiterbildungen der Erfindung sind in den Unteransprüchen erfasst.

Die erfindungsgemäße Siegeleinrichtung zum Verschließen von Verpackungen umfasst eine Siegelstation mit mehreren Aufnahmen für Verpackungen, ein in einer Produktionsrichtung der Siegeleinrichtung stromauf der Siegelstation angeordnetes Übergabeband zum Übergeben von Verpackungen an die Siegelstation, ein stromauf des Übergabebandes angeordnetes Transportband zum Transportieren und Übergeben von Verpackungen an das Übergabeband, und eine Zuführeinrichtung zum Zuführen von Verpackungen an das Transportband, wobei das Transportband und das Übergabeband unabhängig voneinander antreibbar sind und wobei die Siegeleinrichtung wenigstens einen Sensor, der zum Bestimmen eines Abstandes von nacheinander transportierten Verpackungen in der Zuführeinrichtung ausgebildet ist, und eine Steuereinheit umfasst, wobei die Steuereinheit ausgebildet ist, ein Geschwindigkeitsprofil des Transportbandes und ein Geschwindigkeitsprofil des Übergabebandes basierend auf einem von dem Sensor gemessenen Abstand nacheinander transportierter Verpackungen zu bestimmen, und das Transportband und das Übergabeband abhängig von dem Geschwindigkeitsprofil zu steuern, sodass der Abstand von nacheinander folgenden Verpackungen bei einer Übergabe an die Siegelstation dem Abstand benachbarter Aufnahmen für Verpackungen entspricht.

Dass das Übergabeband und das Transportband unabhängig voneinander antreibbar sind, ist hier insbesondere so zu verstehen, dass sich die Geschwindigkeit und/oder Beschleunigung des Übergabebandes von der des Transportbandes unterscheiden kann und diese auch unabhängig voneinander variiert werden können. Insbesondere sind das Übergabeband und das Transportband auch unabhängig von dem Zuführband antreibbar.

Ein Geschwindigkeitsprofil (sowohl für das Übergabeband als auch das Transportband) kann als Differenzprofil der Geschwindigkeit des jeweiligen Bandes von einem Normalbetrieb bei konstanter Geschwindigkeit bestimmt werden. Alternativ kann das Geschwindigkeitsprofil die tatsächliche Bewegung des jeweiligen Bandes abhängig von der Zeit angeben oder charakterisieren. Grundsätzlich kann es sich somit bei dem Geschwindigkeitsprofil um eine Funktion der Geschwindigkeit abhängig von der Zeit, etwa v(t), handeln. Es ist auch möglich, dass das Geschwindigkeitsprofil nur oder auch eine Funktion für die auf das jeweilige Band wirkende Beschleunigung abhängig von der Zeit, etwa a(t), angibt oder umfasst. Alternativ oder zusätzlich kann auch ein Verfahrweg des Bandes abhängig von der Zeit, etwa als s(t), als Geschwindigkeitsprofil angesehen werden. Weiterhin muss das Geschwindigkeitsprofil nicht die vollständigen Funktionen v(t), a(t) oder s(t) angeben. Es kann auch vorgesehen sein, dass das Geschwindigkeitsprofil statt der Funktion oder der Funktionen Parameterwerte angibt, die zum Bestimmen der Funktionen genutzt werden können, wie etwa eine konstante Beschleunigung oder ähnliches.

Dass die Steuereinheit die Geschwindigkeitsprofile bestimmt, bedeutet hier, dass die Steuereinheit abhängig von dem gemessenen Abstand der Verpackungen bestimmt, wie das Übergabeband und/oder das Transportband bewegt werden müssen, um zu bewirken, dass der Abstand der Verpackungen im Übergabeband oder zumindest bei Übergabe an die Siegelstation dem Abstand der Aufnahmen entspricht.

Dabei kann die Übergabe der Verpackungen an die Siegelstation etwa mit Hilfe eines Abnehmers realisiert werden, der eine Anzahl von Verpackungen, die der Anzahl der Aufnahmen der Siegelstation entsprechen kann, aus dem Übergabeband (oder einem dem Übergabeband nachgeordneten Transportband) entnimmt und der Siegelstation zuführt. Die Verpackungen müssen hierzu nicht zwingend stillstehen, sondern können auch während einer Bewegung im Übergabeband oder einem nachgeordneten Transportband von dem Abnehmer entnommen werden.

Diese Siegeleinrichtung erlaubt durch das Erkennen der Abstände der Verpackungen bereits vor dem Transportband und das von dem Zuführband unabhängige Antreiben des Transportbandes und des Übergabebandes eine Kompensation auch größerer Lücken im Strom der Verpackungen, sodass ein besonders prozessstabiler Betrieb der Siegeleinrichtung möglich ist.

Es kann vorgesehen sein, dass die Siegeleinrichtung einen zweiten Sensor umfasst, der zum Bestimmen eines Abstandes von nacheinander transportierten Verpackungen in dem Transportband ausgebildet ist, wobei die Steuereinheit ausgebildet ist, abhängig von dem von dem Sensor gemessenen Abstand und von dem von dem zweiten Sensor gemessenen Abstand ein Geschwindigkeitsprofil des Übergabebandes zu bestimmten und das Übergabeband abhängig von dem Geschwindigkeitsprofil zu steuern.

Die Verwendung des zweiten Sensors zusammen mit dem Sensor, der im Bereich der Zuführeinrichtung angeordnet ist, erlaubt verschiedene Möglichkeiten zur Anpassung der Geschwindigkeitsprofile des Übergabebandes und des Transportbandes. So ist es hiermit möglich, eine Anpassung des Geschwindigkeitsprofils des Transportbandes nur dann vorzusehen, wenn etwa eine Anpassung des Geschwindigkeitsprofils des Übergabebandes nicht ausreichend ist, um eine entstehende Lücke in der Zuführeinrichtung zu kompensieren. Der steuerungstechnische Aufwand kann so reduziert werden.

In einer Ausführungsform ist vorgesehen, dass die Steuereinheit ausgebildet ist, abhängig von dem von dem Sensor gemessenen Abstand nacheinander transportierter Verpackungen in der Zuführeinrichtung zu bestimmen, ob ein für das Übergabeband bestimmtes Geschwindigkeitsprofil bei konstanter Geschwindigkeit des Transportbandes einen Schwellwert für die Bewegung des Übergabebandes überschreitet.

Ein Schwellwert für die Bewegung des Übergabebandes kann beispielsweise eine maximale Beschleunigung oder Verzögerung sein, bei der ein zuverlässiger Transport der Verpackungen auf dem Übergabeband noch möglich ist, ohne deren relative Anordnung auf dem Übergabeband zu beeinträchtigen. Hierdurch können der zuverlässige Transport und die Übergabe der Verpackungen an die Siegelstation auch bei größeren Änderungen der Abstände der Verpackungen in der Zuführeinrichtung sichergestellt werden.

Insbesondere kann die Steuereinheit ausgebildet sein, die Geschwindigkeitsprofile des Transportbandes und des Übergabebandes abhängig von dem von dem Sensor gemessenen Abstand nacheinander transportierter Verpackungen in der Zuführeinrichtung so zu bestimmen, dass der Schwellwert der Bewegung des Übergabebandes nicht überschritten wird.

Wird etwa festgestellt, dass eine Veränderung des Geschwindigkeitsprofils nur des Übergabebandes nicht ausreichend ist bzw. nicht in der Art durchgeführt werden kann, dass der Schwellwert nicht überschritten wird, kann zusätzlich das Geschwindigkeitsprofil des Transportbandes verändert werden. Hierdurch kann ein Teil der notwendigen Anpassung an den sich ändernden Abstand der Verpackungen in der Zuführeinrichtung bereits kompensiert werden, bevor die Verpackungen dann dem Übergabeband zugeführt werden. Das Übergabeband muss dann einen eventuell noch vorhandenen, abweichenden Abstand der Verpackungen in dem Transportband kompensieren, was durch Anpassungen eines Geschwindigkeitsprofils des Übergabebandes unter Einhalten des Schwellwertes bewirkt werden kann. Somit kann insgesamt ein zuverlässiger Transport der Verpackungen zu der Siegelstation gewährleistet werden.

Dabei kann vorgesehen sein, dass der Schwellwert eine maximale Verzögerung und/oder eine maximale Beschleunigung des Übergabebandes angibt. Beschleunigung und Verzögerung können auch allgemein unter dem Begriff der "Beschleunigung" zusammengefasst werden, wobei dann das Vorzeichen des entsprechenden Zahlenwertes angibt, ob es sich um eine Beschleunigung (positives Vorzeichen) oder um eine Verzögerung (negatives Vorzeichen) handelt. Sowohl starke Beschleunigungen als auch starke Verzögerungen können zu einem Verrutschen der Verpackungen auf dem Übergabeband führen, was letztlich zu einer Veränderung von deren relativem Abstand führen kann. Wird die maximale Beschleunigung oder die maximale Verzögerung nicht überschritten, kann dieser Effekt entweder sehr klein gehalten werden oder gar nicht auftreten (etwa weil kein Übergang der Verpackungen von der Haftreibung auf dem Übergabeband in die Gleitreibung erfolgt). Damit kann ein zuverlässiger Transport der Verpackungen in dem notwendigen Abstand gewährleistet werden.

Insbesondere kann das Geschwindigkeitsprofil des Transportbandes und/oder das Geschwindigkeitsprofil des Übergabebandes einen oder mehrere Parameter betreffend eine Beschleunigung, eine Verzögerung, eine Beschleunigungsdauer, eine Verzögerungsdauer, eine Transportgeschwindigkeit, eine Dauer für die die Transportgeschwindigkeit beibehalten wird, umfasst.

In einer Ausführungsform ist die Steuereinheit ausgebildet, die Bewegung des Übergabebandes und des Transportbandes basierend auf den Geschwindigkeitsprofilen so zu steuern, dass sich das Transportband und das Übergabeband zumindest dann, wenn eine Verpackung von dem Transportband an das Übergabeband übergeben wird, mit gleicher Geschwindigkeit bewegen. Hierdurch werden während der Übergabe bevorzugt geringe Kräfte auf die Verpackungen ausgeübt, so dass diese nicht unabsichtlich verrutschen. Dadurch wird ein sicherer Transport der Verpackungen gewährleistet.

Weiterhin kann der Sensor und/oder der zweite Sensor eine Lichtschranke sein oder diese umfassen. Lichtschranken, etwa in Verbindung mit einer Zeitmesseinrichtung wie einer Uhr oder einem Zähler, erlauben bei Kenntnis der Bewegungscharakteristika des Zuführbandes (bzw. der Zuführeinrichtung) eine zuverlässige Abstandsbestimmung auch ohne genaue Kenntnis der Form und/oder Gestalt der Verpackungen, so dass die Siegeleinrichtung auch für unterschiedliche Verpackungsformen anwendbar ist.

Erfindungsgemäß ist ferner ein Verfahren zur Steuerung des Transports von Verpackungen in einer Siegeleinrichtung vorgesehen, wobei die Siegeleinrichtung eine Siegelstation mit mehreren Aufnahmen für Verpackungen, ein stromauf der Siegelstation angeordnetes Übergabeband, das Verpackungen an die Siegelstation übergibt, ein stromauf des Übergabebandes angeordnetes Transportband, das Verpackungen transportiert und an das Übergabeband übergibt, und eine Zuführeinrichtung, die Verpackungen dem Transportband zuführt, umfasst, wobei das Transportband und das Übergabeband unabhängig voneinander antreibbar sind und wobei die Siegeleinrichtung wenigstens einen Sensor, der einen Abstand von nacheinander transportierten Verpackungen in der Zuführeinrichtung bestimmt, und eine Steuereinheit umfasst, wobei das Verfahren umfasst, dass die Steuereinheit ein Geschwindigkeitsprofil des Transportbandes und ein Geschwindigkeitsprofil des Übergabebandes basierend auf einem von dem Sensor gemessenen Abstand nacheinander transportierter Verpackungen bestimmt und das Transportband und das Übergabeband abhängig von dem Geschwindigkeitsprofil so steuert, dass der Abstand von nacheinanderfolgenden Verpackungen bei einer Übergabe an die Siegelstation dem Abstand benachbarter Aufnahmen für Verpackungen entspricht.

Mit diesem Verfahren kann ein zuverlässiger Transport von Verpackungen im notwendigen Abstand zur Siegelstation gewährleistet werden, auch wenn es zu erheblichen Schwankungen im Abstand nacheinander folgender Verpackungen stromaufwärts der Siegelstation kommt.

Es kann vorgesehen sein, dass die Siegeleinrichtung einen zweiten Sensor umfasst, der einen Abstand von nacheinander transportierten Verpackungen in dem Transportband bestimmt, wobei die Steuereinheit abhängig von dem von dem Sensor gemessenen Abstand und von dem von dem zweiten Sensor gemessenen Abstand ein Geschwindigkeitsprofil des Übergabebandes bestimmt und das Übergabeband abhängig von dem Geschwindigkeitsprofil steuert. Mit dieser Ausführungsform kann beispielsweise eine Steuerung nur des Übergabebandes bewirkt werden, wenn die Abstände der Verpackungen in der Zuführeinrichtung vergleichsweise wenig variieren. Die Anpassung des Geschwindigkeitsprofils kann dann beispielsweise auf den gemessenen Abständen auf dem Transportband basieren, wenn der in der Zuführeinrichtung bestimmte Abstand unter einem Grenzwert liegt, bei dessen Überschreiten ggf. auch eine Anpassung des Geschwindigkeitsprofils des Transportbandes erforderlich wäre.

Hier kann insbesondere vorgesehen sein, dass die Steuereinheit abhängig von dem von dem Sensor gemessenen Abstand nacheinander transportierter Verpackungen in der Zuführeinrichtung bestimmt, ob ein für das Übergabeband bestimmtes Geschwindigkeitsprofil bei konstanter Geschwindigkeit des Transportbandes einen Schwellwert für die Bewegung des Übergabebandes überschreitet. Diese Überprüfung gestattet es, festzustellen, ob allein die Anpassung des Geschwindigkeitsprofils des Übergabebandes ausreichend ist oder ob auch das Geschwindigkeitsprofil des Transportbandes geändert werden muss, um einen sich ändernden Abstand der Verpackungen in der Zuführeinrichtung zu kompensieren.

In einer Ausführungsform bestimmt die Steuereinheit die Geschwindigkeitsprofile des Transportbandes und des Übergabebandes abhängig von dem von dem Sensor gemessenen Abstand nacheinander transportierter Verpackungen in der Zuführeinrichtung so, dass der Schwellwert der Bewegung des Übergabebandes nicht überschritten wird. Hiermit wird ein zuverlässiger Transport der Verpackungen auf dem Übergabeband realisiert.

Dabei kann der Schwellwert eine maximale Verzögerung und/oder eine maximale Beschleunigung des Übergabebandes angeben. Da Beschleunigungen und/oder Verzögerungen auf die relative Position von Verpackungen auf dem Übergabeband einen Einfluss haben können, kann durch Berücksichtigung der maximal zulässigen Verzögerung oder Beschleunigung sichergestellt werden, dass keine oder nur geringe unerwünschte Veränderungen der Abstände der Verpackungen innerhalb des Transportbandes auftritt.

In einer Ausführungsform ist weiterhin vorgesehen, dassn das Geschwindigkeitsprofil des Transportbandes und/oder das Geschwindigkeitsprofil des Übergabebandes einen oder mehrere Parameter betreffend eine Beschleunigung, eine Verzögerung, eine Beschleunigungsdauer, eine Verzögerungsdauer, eine Transportgeschwindigkeit, eine Dauer für die die Transportgeschwindigkeit beibehalten wird, umfasst.

Es kann auch vorgesehen sein, dass die Steuereinheit die Bewegung des Übergabebandes und des Transportbandes basierend auf den Geschwindigkeitsprofilen so steuert, dass sich das Transportband und das Übergabeband zumindest dann, wenn eine Verpackung von dem Transportband an das Übergabeband übergeben wird, mit gleicher Geschwindigkeit bewegen. Mit dieser Ausführungsform können die auf die Verpackungen einwirkenden Kräfte bei der Übergabe vom Transportband auf das Übergabeband vorteilhaft reduziert werden.

## Kurze Beschreibung der Figuren

Fig. 1 zeigt eine Siegeleinrichtung gemäß einer Ausführungsform,

Fig. 2 zeigt ein Fließschema zur Bestimmung von Geschwindigkeitsprofilen und entsprechender Steuerung des Transportbandes und/oder des Übergabebandes gemäß einer Ausführungsform.

## Ausführliche Beschreibung

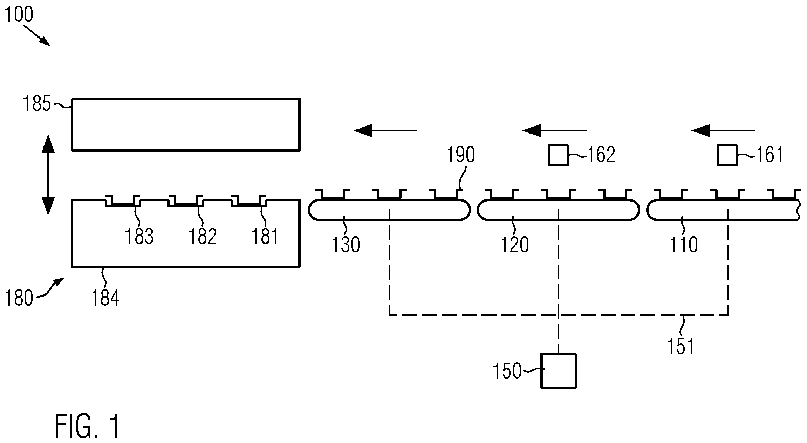

Fig. 1 zeigt eine schematische Seitenansicht einer Siegeleinrichtung 100 gemäß einer Ausführungsform. Die Siegeleinrichtung 100 umfasst in der hier dargestellten Ausführungsform eine Siegelstation 180. Diese Siegelstation 180 umfasst üblicherweise zwei relativ zueinander bewegbare Elemente, wobei ein erstes Element 184 eine Reihe von Aufnahmen 181 - 183 umfasst. In diese Aufnahmen können die hier dargestellten Verpackungen 190 eingebracht werden, um dann in Wechselwirkung mit dem zweiten Element 185, das in Richtung auf die Aufnahmen 181 - 183 bzw. das erste Element 184 zu bewegt werden kann, etwa durch Aufbringen einer Folie verschlossen zu werden. Die Funktionsweise der Siegelstation 180 ist grundsätzlich bekannt und wird hier nicht weiter im Detail erläutert.

In Transportrichtung der Verpackungen 190 durch die Siegeleinrichtung 100 stromaufwärts der Siegelstation 180 sind weitere Einrichtungen 110 - 130 dargestellt. Die Transportrichtung ist dabei die Richtung, in der die Verpackungen 190 durch die Siegeleinrichtung 100 transportiert werden. Die Transportrichtung ist über den Einrichtungen 110 - 130 mit Pfeilen dargestellt.

Bei den Einrichtungen 110 - 130 handelt es sich gemäß einer Ausführungsform um Transportbänder, die bevorzugt alle unabhängig voneinander antreibbar sind. Das bedeutet, dass das Transportband 110 mit einer Geschwindigkeit und/oder Beschleunigung angetrieben werden kann, die von den Geschwindigkeiten und/oder Beschleunigungen der Bänder 120, 130 verschieden ist. Selbiges gilt für die übrigen Bänder 120, 130, so dass prinzipiell ein Antrieb der Bänder 110 - 130 derart möglich ist, dass ihre Geschwindigkeiten und/oder Beschleunigungen paarweise verschieden sind.

Die Bänder 110 - 130 werden im Folgenden unterschiedlich bezeichnet, um eine bessere Unterscheidung zu ermöglichen. Das Band 110 wird auch als Zuführeinrichtung 110 bezeichnet. Die Einrichtung 120 wird im Folgenden als Transportband 120 bezeichnet werden und die Einrichtung 130 als Übergabeband 130.

Die Zuführeinrichtung 110 ist so angeordnet, dass sie Verpackungen 190 dem Transportband 120 zuführen kann. Die Zuführeinrichtung kann hierzu als Endlosförderer ausgebildet sein, auf dem die Verpackungen 190 nicht zwingend geordnet (insbesondere mit Hinblick auf ihren Abstand) angelangen müssen, so dass sie in dieser Einrichtung auch mit veränderlichem Abstand zueinander transportiert werden können. Dies bedeutet, dass zwei aufeinanderfolgende Verpackungen in der Zuführeinrichtung 110 nicht notwendig stets denselben Abstand aufweisen. Das Transportband 120 ist bevorzugt so ausgestaltet, dass es die Verpackungen 190 auch in voneinander verschiedenen Abständen aufnehmen kann. Das Übergabeband 130 ist derart ausgebildet und angeordnet, dass es Verpackungen 190 von dem Transportband 120 übernehmen kann und diese auf geeignete Weise der Siegelstation 180 zuführen kann.

Dazu ist insbesondere vorgesehen, dass die Verpackungen 190 auf dem Übergabeband 130 auf einen Abstand gebracht werden können, der dem Abstand der Aufnahmen 181 - 183 in der Siegelstation 180 entspricht. Es kann vorgesehen sein, dass die Verpackungen von dem Übergabeband 130 nicht direkt an die Siegelstation 180 übergeben werden, sondern etwa von einem (hier nicht dargestellten) Mitnehmer von dem Übergabeband übernommen, ggf. angehoben und in die Aufnahmen 181 - 183 eingebracht werden. Dazu kann der Mitnehmer eine Anzahl von Greifelementen umfassen, die die Verpackungen greifen und in den Aufnahmen 181 - 183 ablegen können.

Alternativ kann auch vorgesehen sein, dass zwischen dem Übergabeband 130 und der Siegelstation 180 ein weiteres (hier nicht dargestelltes) Transportband angeordnet ist, das die Verpackungen mit konstanter Geschwindigkeit transportiert und optional taktweise stoppt, so dass ein Mitnehmer die Verpackungen 190 von diesem Transportband übernehmen und den Aufnahmen 181 -183 zuführen kann. Durch taktweise Bewegung dieses zusätzlichen Transportbandes kann erreicht werden, dass die Verpackungen 190 nicht während einer Bewegung von dem Mitnehmer übernommen werden müssen, was steuerungstechnisch ggf. schwieriger zur realisieren wäre.

Weiterhin ist in der Fig. 1 eine Steuereinheit 150 dargestellt. Diese Steuereinheit kann beispielsweise als Steuerungscomputer ausgestaltet sein, der über geeignete Programme und/oder Hardware verfügt, die zur Steuerung der Bewegung der Einrichtungen 110- 130 ausgestaltet ist. Dazu kann die Steuereinheit 150 über Mittel zur Datenübertragung 151 mit jeder der Einrichtungen 110 - 130 verbunden sein. Diese Mittel 151 können etwa als Datenkabel ausgestaltet sein aber auch eine drahtlose Verbindung, etwa über WAN, W-LAN oder Bluetooth realisieren.

Insbesondere ist vorgesehen, dass die Steuereinheit 150 zumindest für das Transportband 120 und das Übergabeband 130 ein Geschwindigkeitsprofil bestimmen kann und abhängig von diesem Geschwindigkeitsprofil die Bewegung des Transportbandes 120 und/oder des Übergabebandes 130 steuern kann. Dazu kann die Steuereinheit etwa mit einer Antriebseinrichtung des Transportbandes und/oder des Übergabebandes zum Zwecke der Steuerung verbunden sein. Insbesondere können hierzu ebenfalls Mittel zur Datenübertragung, wie etwa LAN-Verbindungen oder drahtlose Verbindungen über Bluetooth oder W-LAN vorgesehen sein. Die Steuereinheit kann so beispielweise einen einem Servomotor zugeführten Strom o. ä. steuern, um die Geschwindigkeitsprofile des Transportbandes und des Übergabebandes in eine Bewegung des Transportbandes und des Übergabebandes umzusetzen.

Die Geschwindigkeitsprofile sind dabei charakteristisch für eine von dem Transportband 120 und/oder Übergabeband 130 auszuführende Bewegung. Sie können insbesondere eine Geschwindigkeit und/oder eine Beschleunigung und/oder eine zurückzulegende Wegstrecke eines Punktes des Transportbandes kennzeichnen. Die Geschwindigkeitsprofile können hierzu beispielsweise in Form einer mathematischen Funktion, die den Verfahrweg $s(t)$ des jeweiligen Bandes abhängig von der Zeit angibt, von der Steuereinheit bestimmt werden. Alternativ oder zusätzlich können auch etwa die Geschwindigkeit abhängig von der Zeit, etwa in Form einer Funktion $v(t)$, oder eine Beschleunigung, etwa in Form einer Funktion $a(t)$, von der Steuereinheit bestimmt werden und abhängig davon Steuersignale für Antriebseinrichtungen der Bänder 120, 130 abgeleitet werden. Die Darstellung oder das Erlangen von Funktionen ist jedoch nicht zwingend. Auch eine andere Realisierung von Signalen zur Steuerung der Bewegung der Bänder 120, 130 ist denkbar.

Werden jedoch im Rahmen der Geschwindigkeitsprofile entsprechende, zeitlich abhängige Funktionen bestimmt, so können sich diese auch lediglich auf ein bestimmtes Zeitintervall beziehen und müssen keine über die Zeit kontinuierliche (im Sinne einer lückenlosen) Darstellung der Bewegung der Transportbänder liefern. Beispielsweise kann vorgesehen sein, dass die Geschwindigkeitsprofile lediglich als Differenzprofile zu einem ansonsten voreingestellten Geschwindigkeitsprofil des Transportbandes und des Übergabebandes bestimmt werden. Ist beispielsweise für eine Dauer von fünf Sekunden eine veränderte Beschleunigung und/oder veränderte Geschwindigkeit des Übergabebandes 130 erforderlich, so kann die Steuereinheit 150 ein Geschwindigkeitsprofil für das Übergabeband 130 bestimmen, das nur während dieser fünf Sekunden auf das Übergabeband 130 angewendet wird und anschließend wieder zu einer etwa voreingestellten Bewegung des Übergabebandes zurückgekehrt wird. Die Erfindung ist diesbezüglich jedoch nicht beschränkt.

Weiterhin ist im Bereich der Zuführeinrichtung 110 zumindest ein (erster) Sensor 161 vorgesehen. Dieser Sensor ist so angeordnet und ausgebildet, dass er den Abstand zwischen nacheinander transportierten Verpackungen in der Zuführeinrichtung 110 bestimmen kann. Der so bestimmte Abstand oder ein für diesen Abstand indikatives Signal (beispielsweise ein Signal, das angibt, dass keine Verpackung im Bereich des Sensors erkannt wird) kann über geeignete Mittel zur Datenübertragung dann an die Steuereinheit 150 übermittelt werden.

Bevorzugt ist der Sensor 161 im Bereich der Zuführeinrichtung 110 stromaufwärts der Transportrichtung der Verpackungen möglichst weit entfernt von einem Übergabepunkt, an dem die Verpackungen an das Transportband übergeben werden, angeordnet.

Da sich der Abstand aufeinanderfolgend transportierter Verpackungen in der Zuführeinrichtung 110 ändern kann, kann der von dem ersten Sensor 161 bestimmte Abstand nachfolgender Verpackungen von der Steuereinheit genutzt werden, um festzustellen, ob eine Veränderung des Geschwindigkeitsprofils des Übergabebandes und/oder des Transportbandes notwendig ist, um sicherzustellen, dass der Abstand der Verpackungen, wenn sie von dem Übergabeband 130 an die Siegelstation übergeben werden, dem Abstand der Aufnahmen entspricht.

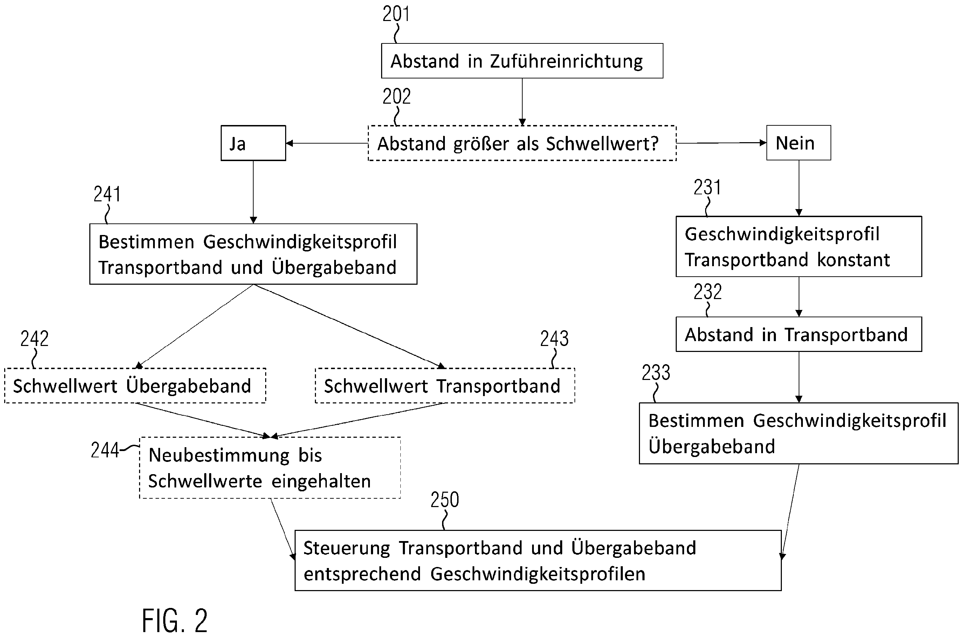

Wie im Weiteren mit Bezug auf Fig. 2 noch beschrieben wird, ist die Steuereinheit 150 bevorzugt so ausgebildet, dass sie die Geschwindigkeitsprofile des Transportbands 120 und/oder des Übergabebands 130 derart steuern kann, dass Schwellwerte etwa für die Beschleunigung und/oder die Geschwindigkeit dieser Bänder nicht überschritten werden. Die Schwellwerte können dabei Werte sein, die angeben, bis zu welchem Betrag oder Wert eine Beschleunigung (einschließlich Vergrößerung der Geschwindigkeit oder Verringerung der Geschwindigkeit im Rahmen einer Verzögerung) ggf. über welche maximale Zeitdauer bewirkt werden können, ohne dass bereits mit dem Transportband und/oder dem Übergabeband transportierte Verpackungen während dieser Beschleunigung verrutschen.

Die Schwellwerte können etwa abhängig von einem Haftreibungskoeffizienten und/oder einem Gleitreibungskoeffizienten des jeweiligen Verpackungsmaterials bezüglich des Materials des mit den Verpackungen in Kontakt kommenden Teils des Transportbandes und/oder des Übergabebandes bestimmt werden. Dabei kann vorgesehen sein, dass die Schwellwerte so gewählt sind, dass bei Erfahren einer Beschleunigung unterhalb des Schwellwertes die Verpackungen nicht von ihrer Haftreibung auf dem jeweiligen Band in die Gleitreibung übergehen. Ein Verrutschen der Verpackungen relativ zum jeweilen Band wird so vermieden.

Bevorzugt kann vorgesehen sein, dass die Steuereinheit 150 abhängig von dem mit dem ersten Sensor 161 gemessenen Abstand von aufeinanderfolgenden Verpackungen zunächst bestimmt, ob allein eine Änderung des Geschwindigkeitsprofils des Übergabebandes ausreichend ist, um den Abstand zwischen den Verpackungen so einzustellen, dass er dem Abstand der Aufnahmen 181 - 183 in der Siegelstation 180 entspricht und, wenn diese Einstellung vorgenommen wird, keine Beschleunigung oder Verzögerung des Übergabebandes erfolgt, die den Schwellwert überschreitet. Wird festgestellt, dass der Schwellwert überschritten würde, wenn ein Einstellen des Abstands nacheinander folgender Verpackungen allein durch Veränderung der Bewegung des Übergabebandes 130 bewirkt würde, kann vorgesehen sein, dass die Steuereinheit dann auch eine Veränderung des Geschwindigkeitsprofils des Transportbandes 120 vornimmt bzw. ein Geschwindigkeitsprofil für das Transportband 120 bestimmt, mit dem dann das Transportband gesteuert wird, so dass ein Teil der notwendigen Veränderung des Abstandes nachfolgender Verpackungen bereits durch das Transportband ausgeführt wird.

Damit kann das Bestimmen der Geschwindigkeitsprofile des Transportbandes 120 und des Übergabebandes 130 so gestaltet werden, dass für keines der Transportbänder ein Schwellwert überschritten wird.

Zusätzlich kann ein zweiter Sensor 162 im Bereich des Transportbandes 120 vorgesehen sein. Dieser ist bevorzugt so angeordnet und ausgebildet, dass er den Abstand nachfolgend aufeinander transportierter Verpackungen auf dem Transportband 120 bestimmen kann. Die Steuereinheit 150 kann dann zusätzlich ausgebildet sein, auch den von diesem zweiten Sensor 162 bestimmten Abstand nachfolgender Verpackungen im Transportband 120 zu verwenden, um das Geschwindigkeitsprofil des Übergabebandes zu bestimmen und/oder zu steuern.

Dabei kann insbesondere vorgesehen sein, dass, wenn anhand des von dem ersten Sensor gemessenen Abstands festgestellt wird, dass ein Schwellwert für die Beschleunigung des Übergabebandes nicht überschritten wird, die Steuereinheit zunächst keine weitere Steuerung oder Bestimmung von Geschwindigkeitsprofilen sowohl für das Transportband als auch das Übergabeband vornimmt. Erst wenn der zweite Sensor 162 angibt, dass der Abstand nachfolgender Verpackungen in dem Transportband eine Modifikation des Geschwindigkeitsprofils des Übergabebandes erforderlich macht, kann die Steuereinheit dann ein entsprechendes Geschwindigkeitsprofil für das Übergabeband bestimmen und es dementsprechend steuern.

Hierzu zeigt Fig. 2 ein Fließschema entsprechend einer Ausführungsform für die Steuerung des Übergabebandes und/oder des Transportbandes durch die Steuereinheit.

In der Fig. 2 beginnt das dargestellte Verfahren mit dem Schritt 201, indem ein Abstand von aufeinanderfolgenden Verpackungen in der Zuführeinrichtung 110 (etwa mittels des Sensors 161) bestimmt wird. Bevorzugt findet diese Bestimmung für jedes Paar aufeinanderfolgender Verpackungen statt, sodass für jedes Paar von aufeinanderfolgenden Verpackungen überprüft werden kann, ob ihr Abstand dem Abstand der Aufnahmen in der Siegelstation entspricht. Im nächsten Schritt 202 prüft die Steuereinheit dann basierend auf dem gemessenen Abstand, ob dieser Abstand bzw. eine Korrektur dieses Abstandes eine Beschleunigung und/oder Geschwindigkeit des Übergabebandes 130 oder des Transportbandes erforderlich machen würde, die größer ist als ein Schwellwert, der für die möglichen Geschwindigkeitsprofile des Übergabebandes und/oder des Transportbandes gilt.

Hierzu kann beispielsweise die vorzunehmende Korrektur des Abstandes ermittelt werden. Beträgt der Abstand aufeinanderfolgender Verpackunen beispielsweise 20cm, der Abstand der Aufnahmen jedoch 10cm, muss der Abstand der Verpackungen durch geeignete Steuerung der Bewegung des Übergabebandes und/oder des Transportbandes um 10cm verringert werden. Daraus lassen sich aufgrund der Kenntnis der übrigen Betriebsparameter (etwa Geschwindigkeit des Übergabebandes und des Transportbandes) etwa notwendige Beschleunigungen oder Verzögerungen ableiten, um eine solche Abstandsveränderung zu bewirken. Diese können dann mit einem Schwellwert verglichen werden, um im Schritt 202 zu Prüfen, ob wenigstens ein Schwellwert überschritten wird.

Alternativ kann auch vorgesehen sein, dass direkt aus der Messung des Abstandes bestimmt werden kann, ob eine Korrektur des Abstandes lediglich durch Änderung der Bewegung des Transportbandes oder des Übergabebandes einen Schwellwert überschreitet. Anstelle aus den gemessenen Abständen zunächst zu bestimmen, ob bei den bekannten Geschwindigkeiten von Transportband und Übergabeband die nötige Beschleunigung oder Verzögerung einen Schwellwert überschreitet, kann der zu diesem Schwellwert gehörige Abstand der Verpackungen in der Zuführeinrichtung auch als Grenzabstand genutzt werden, da dessen Überschreiten (für Beschleunigungen) oder Unterschreiten (für Verzögerungen) bereits indikativ für das entspechende Überschreiten oder Unterschreiten der Schwellwerte für die Bewegung des Übergabebandes bzw. Transportbandes ist.

Dieser Schritt 202 kann optional sein und muss nicht durchgeführt werden. Wird er nicht durchgeführt, folgt das Verfahren stets dem weiteren Verfahren, wie es durchgeführt werden würde, wenn im Schritt 202 festgestellt wird, dass der Abstand so groß ist, dass wenigstens ein Schwellwert für die Bewegung des Transportbandes und/oder des Übergabebandes überschritten werden würde.

Zunächst wird davon ausgegangen, dass im Schritt 202 festgestellt wird, dass der Abstand zwischen aufeinanderfolgenden Verpackungen in der Zuführeinrichtung nicht so groß (oder so gering) ist, dass ein Schwellwert für ein Geschwindigkeitsprofil des Übergabebandes überschritten wird.

Basierend auf dieser Feststellung kann im Schritt 231 dann von der Steuereinheit erkannt werden, dass die Geschwindigkeit des Transportbandes zum Zwecke der Einstellung des Abstandes dieser nachfolgenden Verpackungen nicht geändert werden muss.

Im Schritt 232 kann dann optional der Abstand dieser aufeinanderfolgenden Verpackungen nach ihrer Übergabe an das Transportband auf dem Transportband (etwa unter Verwendung des zweiten Sensors 162) bestimmt werden.

Entweder basierend auf dem in Schritt 201 gemessenen Abstand aufeinander folgender Verpackungen in der Zuführeinrichtung oder dem optional in Schritt 232 gemessenen Abstand der nachfolgenden Verpackungen auf dem Transportband, kann dann in Schritt 233 das Geschwindigkeitsprofil des Übergabebandes so bestimmt werden, dass der Abstand nacheinander folgender Verpackungen so eingestellt wird, dass sie, sobald die nacheinander folgenden Verpackungen beide von dem Übergabeband übernommen wurden, einen Abstand aufweisen, der dem Abstand der Aufnahmen in der Siegelstation entspricht.

Hierzu wird das Geschwindigkeitsprofil des Übergabebandes dann so bestimmt, dass es zunächst beispielsweise mit unverminderter Geschwindigkeit weiterfährt und die vorauseilende Verpackung der beiden nachfolgenden Verpackungen übernimmt. Das Geschwindigkeitsprofil umfasst ferner ein Beschleunigungsintervall, in dem die Geschwindigkeit des Übergabebandes vergrößert oder verringert wird. Weiterhin kann das Geschwindigkeitsprofil ein Zeitintervall umfassen, in dem das Übergabeband mit der vergrößerten oder verringerten Geschwindigkeit bewegt wird. Dem anschließen kann sich ein zweites Beschleunigungsintervall, um die Geschwindigkeit des Übergabebandes wieder auf die ursprüngliche Geschwindigkeit zu bringen. Diese Intervalle, sowie die Beschleunigungen und die vergrößerte oder verringerte Geschwindigkeit können wie folgt dargestellt werden.

Zunächst ergibt sich für die gesamte für die Korrektur des Abstandes aufeinanderfolgender Verpackungen verfügbare Zeit T aus der Zeit, die zwischen der Übergabe der vorauseilenden Verpackung an das Übergabeband und der Übergabe der nacheilenden Verpackung des Paares aufeinanderfolgender Verpackungen an das Übergabeband verstreicht. Bewegen sich die Verpackungen im Transportband mit der Geschwindigkeit V, dann ist diese Zeit T gegeben durch $T = \frac{S}{V}$ , wobei S der Abstand der Verpackungen in dem Transportband bzw. der Zuführeinrichtung ist, bzw. der von den Sensoren ermittelte Abstand.

Das für das erste Beschleunigungsintervall und das zweite Beschleunigungsintervall verfügbare Zeitintervall kann jeweils gleich groß gewählt werden, etwa $t_1$. Für das Zeitintervall, das für die Bewegung mit der konstanten Geschwindigkeit k zwischen diesen Intervallen liegt, ergibt sich dann das Zeitintervall $t_2 = T - 2t_1$. Die Beschleunigung $a_1$ im ersten Beschleunigungsintervall kann bevorzugt gleich der Beschleunigung $a_2$ im zweiten Beschleunigungsintervall, nur mit entgegengesetztem Vorzeichen gewählt sein, sodass allgemein die Beschleunigung als a bezeichnet wird.

Für die Geschwindigkeit k in dem Intervall $t_2$ gilt dann, dass k=V+at, ist, sofern, wovon hier ausgegangen wird, die Beschleunigung in dem Zeitintervall $t_1$ zeitlich konstant ist.

Damit sind die, die Geschwindigkeit des Übergabebandes charakterisierenden Parameter, die noch angepasst werden können, um eine Veränderung des Abstands zu bewirken, die Beschleunigung a und das Zeitintervall $t_1$.

Um diese und damit das Geschwindigkeitsprofil des Übergabebandes zu bestimmen, kann die Steuereinheit nun einen Soll-Abstand D, der etwa gleich dem Abstand der Aufnahmen der Siegelstation sein kann, verwenden. Unabhängig von der Bewegung der nachfolgenden Verpackung wird bei einer Bewegung des Übergabebandes nach Übernahme der vorauseilenden Verpackung um die Strecke D im Zeitintervall T sichergestellt, dass der Abstand der dann vom Übergabeband übernommenen nachfolgenden Verpackung zur vorauseilenden Verpackung gleich D ist.

Damit muss dann gelten, dass

$$D = Vt_1 + \frac{a}{2}t_1^2 + (V + at_1)(T - 2t_1) + (V + at_1)t_1 - \frac{a}{2}t_1^2$$

Der erste Summand $Vt_1 + \frac{a}{2}t_1^2$ beschreibt die zurückgelegte Wegstrecke während des ersten Beschleunigungsintervalls. Der zweite Summand $(V + at_1)(T - 2t_1)$ beschreibt die Bewegung mit konstanter Geschwindigkeit im Zeitintervall $t_2$ und der dritte Summand $(V + at_1)t_1 - \frac{a}{2}t_1^2$ beschreibt die Bewegung im zweiten Beschleunigungsintervall. Wie zu erkennen, ist diese Gleichung unabhängig von $\frac{a}{2}t_1^2$, da Verzögerung und Beschleunigung sich hier aufheben. Daraus ergibt sich dann, dass

$$D = Vt_1 + (V + at_1)(T - 2t_1) + (V + at_1)t_1$$

Hieraus lässt sich eine Bedigung für a und $t_1$ ableiten, die sich als

$$t_1 = \pm\sqrt{\frac{VT - D}{a}}$$

darstellen lässt. Damit könnten im Prinzip das Zeitintervall t, und die Beschleunigung a stets so gewählt werden, dass ein Schwellwert für die Beschleunigung a nie überschritten wird. Allerdings muss ferner gelten, dass $\frac{T}{2} \geq t_1$ $t_1$ ist, da für den gesamten Vorgang nur die Zeit T zur Verfügung steht. Für den Grenzfall, dass $\frac{T}{2} = t_1$, lässt sich damit ein Grenzwert für die Beschleunigung a ermittelt, der

$$a = a_{Grenzwert} = 4\frac{VT - D}{T^2}$$

Ist. Dieser Wert müsste für die Beschleunigung gewählt werden, wenn das Übergabeband im Zeitintervall T kein Intervall konstanter Geschwindigkeit zwischen den beiden Beschleunigungsintervallen besitzt. Für diesen Fall ist das Geschwindigkeitsprofil damit vollständig bestimmt, das das Zeitintervall $t_1$ für die Beschleunigung und die Verzögerung, sowie die Beschleunigung a bekannt sind. Sollte vorgesehen sein, dass sich das Übergabeband zwischen den Beschleunigungsintervallen mit konstanter Geschwindigkeit bewegt, kann obige Gleichung Korrekturen erfordern. Hier kann etwa durch weitere Randbedingungen, wie Teilung des Zeitintervalls T in drei gleich große Zeitintervalle, eine Einschränkung des Parameterbereichs für a und $t_1$ erfolgen, sodass diese Größen bestimmt und damit das Geschwindigkeitsprofil angegeben werden kann.

Hiermit kann dann eine Steuerung des Übergabebandes im Zeitintervall T erfolgen, sodass nach Übernahme der vorauseilenden Verpackung und der nachlaufenden Verpackung diese einen Abstand von D entsprechend dem Abstand in den Aufnahmen zueinander aufweisen.

Die obigen Ausführungen sind nur beispielhaft. Es ist auch möglich, die Beschleunigung und/oder Geschwindigkeit anders zu bestimmen, um den Abstand einzustellen.

Basierend auf dem abgeleiteten oder bestimmten Geschwindigkeitsprofil kann dann im Schritt 250 die Steuerung des Übergabebandes entsprechend dem Geschwindigkeitsprofil erfolgen, sobald die vorauseilende Verpackung an das Übergabeband übergeben wird. Dabei erfolgt bevorzugt die Übergabe jeder Verpackung an das Übergabeband so (wie bei obiger Rechnung auch bereits angenommen), dass die Geschwindigkeit des Übergabebandes und des Transportbandes während der Übergabe gleich ist. So werden unerwünschte, auf die Verpackungen wirkende Kräfte vermieden.

Die Schritte 231 bis 233 werden hier so beschrieben, dass das Geschwindigkeitsprofil des Transportbandes konstant gehalten wird. Dies bedeutet nicht zwingend, dass das Transportband auch mit konstanter Geschwindigkeit betrieben wird. Es bedeutet lediglich, dass aufgrund des in der Zuführeinrichtung gemessenen Abstandes zwischen nachfolgenden Verpackungen keine Änderung des Geschwindigkeitsprofils des Transportbandes erfolgt. Etwaige Zyklen aus Beschleunigung und Verlangsamung des Transportbandes können weiterhin durchgeführt werden.

Bevorzugt kann jedoch sein, dass das Transportband, sofern keine Änderung seines Geschwindigkeitsprofils nötig ist, mit konstanter Geschwindigkeit bewegt wird. Dies kann, muss jedoch nicht, ebenso für das Übergabeband gelten.

Wird im Schritt 202 festgestellt, dass der Abstand aufeinanderfolgender Verpackungen in der Zuführeinrichtung einen Grenzabstand übersteigt (oder unterschreitet), der etwa indikativ dafür ist, dass auch ein Schwellwert eines Parameters der Bewegung des Übergabebandes überschritten werden müsste, um den Abstand zwischen aufeinanderfolgenden Verpackungen der Zuführeinrichtung mit diesem Abstand zu kompensieren, wird dies im Schritt 202 festgestellt (mit "ja" gekennzeichnet).

Basierend auf dieser Feststellung kann die Steuereinheit im Schritt 241 dies Geschwindigkeitsprofile des Transportbandes und des Übergabebandes so bestimmen, dass der Abstand der aufeinanderfolgenden Verpackungen so verändert wird, dass er dem Abstand der Aufnahmen in der Siegelstation entspricht, ohne dass dabei ein Schwellwert für die Bewegungsprofile von Transportband und Übergabeband überschritten wird. Dies kann analog zum Schritt 233 erfolgen, wobei beispielsweise vorgesehen sein kann, dass je die Hälfte der notwendigen Korrektur des Abstandes durch eine Steuerung des Geschwindigkeitsprofils des Transportbandes und durch eine Steuerung des Geschwindigkeitsprofils des Übergabebandes kompensiert wird. Damit können die notwendigen Beschleunigungen und/oder Verzögerungen für das Transportband und das Übergabeband reduziert werden.

Alternativ kann auch vorgesehen sein, dass die Steuereinheit etwa iterativ versucht, das Geschwindigkeitsprofil des Übergabebandes genau so anzupassen, dass der Schwellwert nicht überschritten wird und jede dann noch nötige Korrektur des Abstandes der aufeinanderfolgenden Verpackungen dann durch eine Änderung des Geschwindigkeitsprofils des Transportbandes durchgeführt wird.

Alternativ kann auch vorgesehen sein, dass eine Änderung des Geschwindigkeitsprofils des Transportbandes bis an den Schwellwert heran erfolgt. Je größer die Beschleunigungen und/oder Verzögerungen sind, die auf die Verpackungen wirken, desto wahrscheinlicher kann es sein, dass es zu einem Verrutschen der Verpackungen kommt. Wird daher auf dem Transportband bereits eine an den Schwellwert heranreichende Verzögerung und/oder Beschleunigung genutzt, um den Abstand aufeinanderfolgender Verpackungen zu verändern, kann etwa mithilfe des zweiten Sensors (siehe der zweite Sensor 162 in Fig. 1) der sich daraus ergebende Abstand der Verpackungen und etwa auch ein veränderter Abstand von bereits auf dem Transportband befindlichen Verpackungen bestimmt werden und anschließend eine Korrektur des Geschwindigkeitsprofils des Übergabebandes erfolgen, wobei diese Korrektur dann unter dem für das Übergabeband maßgeblichen Schwellwert liegt. Diese Ausgestaltung kann die Zuverlässigkeit beim Betrieb der Siegeleinrichtung erhöhen.

Grundsätzlich kann das Bestimmen der Geschwindigkeitsprofile im Schritt 242 und im Schritt 243 so erfolgen, dass zunächst sowohl für das Übergabeband als auch für das Transportband Geschwindigkeitsprofile erstellt werden, die jedes für sich bereits geeignet wären, die gesamte Korrektur des Abstandes durchzuführen. Es wird dann geprüft, inwieweit diese Geschwindigkeitsprofile vom Schwellwert abweichen bzw. diesen überschreiten. Die Geschwindigkeitsprofile können dann etwa basierend auf dem so bestimmten Geschwindigkeitsprofil für das Transportband in Schritt 242 oder für das so bestimmte Geschwindigkeitsprofil in 243 im Schritt 244 so lange iterativ neu bestimmt werden, bis kein Schwellwert mehr überschritten wird. Alternativ kann, wie bereits oben erwähnt, die notwendige Abstandskorrektur auch hälftig auf jedes der Bänder, also auf das Transportband und das Übergabeband verteilt werden.

Sind die Geschwindigkeitsprofile bestimmt, werden sowohl das Transportband als auch das Übergabeband dann im Schritt 250 entsprechend gesteuert, um die Korrektur des Abstandes der aufeinanderfolgenden Verpackungen vorzunehmen.

Dabei kann erneut vorgesehen sein, dass Transportband und Übergabeband zumindest während der Übergabe einer Verpackung jeweils die gleiche Geschwindigkeit aufweisen. Eine Beschleunigung oder Verzögerung findet demnach bevorzugt dann statt, wenn die vorauseilende Verpackung des Paares nachfolgender Verpackungen vom Transportband an das Übergabeband übergeben wurde und bevor die nachfolgende Verpackung vom Transportband an das Übergabeband übergeben wird. Analog kann vorgesehen sein, dass auch das Transportband bevorzugt erst beschleunigt wird, wenn es die vorauseilende Verpackung des Paares nacheinander folgender Verpackungen von der Zuführeinrichtung übernommen hat und bevor es die nachlaufende Verpackung von der Zuführeinrichtung übernimmt wieder eine Geschwindigkeit aufweist, die gleich der Transportgeschwindigkeit der Verpackungen in der Zuführeinrichtung ist.

**Patentansprüche**

1. Siegeleinrichtung (100) zum Verschließen von Verpackungen (190), die Siegeleinrichtung umfassend eine Siegelstation (180) mit mehreren Aufnahmen (181-183) für Verpackungen, ein stromauf der Siegelstation angeordnetes Übergabeband (130) zum Übergeben von Verpackungen an die Siegelstation, ein stromauf des Übergabebandes angeordnetes Transportband (120) zum Transportieren und Übergeben von Verpackungen an das Übergabeband, und eine Zuführeinrichtung (110) zum Zuführen von Verpackungen an das Transportband, wobei das Transportband und das Übergabeband unabhängig voneinander antreibbar sind und wobei die Siegeleinrichtung wenigstens einen Sensor (161), der zum Bestimmen eines Abstandes von nacheinander transportierten Verpackungen in der Zuführeinrichtung (110) ausgebildet ist, und eine Steuereinheit (150) umfasst, **dadurch gekennzeichnet, dass** die Steuereinheit ausgebildet ist, ein Geschwindigkeitsprofil des Transportbandes (120) und ein Geschwindigkeitsprofil des Übergabebandes (130) basierend auf einem von dem Sensor gemessenen Abstand nacheinander transportierter Verpackungen zu bestimmen, und das Transportband und das Übergabeband abhängig von dem Geschwindigkeitsprofil zu steuern, sodass der Abstand von nacheinander folgenden Verpackungen bei einer Übergabe an die Siegelstation (180) dem Abstand benachbarter Aufnahmen für Verpackungen entspricht.

2. Siegeleinrichtung (100) nach Anspruch 1, wobei die Siegeleinrichtung einen zweiten Sensor (162) umfasst, der zum Bestimmen eines Abstandes von nacheinander transportierten Verpackungen in dem Transportband (120) ausgebildet ist, wobei die Steuereinheit (150) ausgebildet ist, abhängig von dem von dem Sensor (161) gemessenen Abstand und von dem von dem zweiten Sensor (162) gemessenen Abstand ein Geschwindigkeitsprofil des Übergabebandes (130) zu bestimmten und das Übergabeband abhängig von dem Geschwindigkeitsprofil zu steuern.

3. Siegeleinrichtung (100) nach Anspruch 2, wobei die Steuereinheit (150) ausgebildet ist, abhängig von dem von dem Sensor (161) gemessenen Abstand nacheinander transportierter Verpackungen in der Zuführeinrichtung (110) zu bestimmen, ob ein für das Übergabeband (130) bestimmtes Geschwindigkeitsprofil bei konstanter Geschwindigkeit des Transportbandes (120) einen Schwellwert für die Bewegung des Übergabebandes überschreitet.

4. Siegeleinrichtung (100) nach Anspruch 3, wobei die Steuereinheit (150) ausgebildet ist, die Geschwindigkeitsprofile des Transportbandes (120) und des Übergabebandes (130) abhängig von dem von dem Sensor (161) gemessenen Abstand nacheinander transportierter Verpackungen in der Zuführeinrichtung (110) so zu bestimmen, dass der Schwellwert der Bewegung des Übergabebandes nicht überschritten wird.

5. Siegeleinrichtung (100) nach Anspruch 3 oder 4, wobei der Schwellwert eine maximale Verzögerung und/oder eine maximale Beschleunigung des Übergabebandes (130) angibt.

6. Siegeleinrichtung (100) nach einem der Ansprüche 1 bis 5, wobei das Geschwindigkeitsprofil des Transportbandes (120) und/oder das Geschwindigkeitsprofil des Übergabebandes (130) einen oder mehrere Parameter betreffend eine Beschleunigung, eine Verzögerung, eine Beschleunigungsdauer, eine Verzögerungsdauer, eine Transportgeschwindigkeit, eine Dauer für die die Transportgeschwindigkeit beibehalten wird, umfasst.

7. Siegeleinrichtung (100) nach einem der Ansprüche 1 bis 5, wobei die Steuereinheit (150) ausgebildet ist, die Bewegung des Übergabebandes (130) und des Transportbandes (120) basierend auf den Geschwindigkeitsprofilen so zu steuern, dass sich das Transportband und das Übergabeband zumindest dann, wenn eine Verpackung von dem Transportband an das Übergabeband übergeben wird, mit gleicher Geschwindigkeit bewegen.

8. Siegeleinrichtung (100) nach einem der Ansprüche 1 bis 7, wobei der Sensor und/oder der zweite Sensor eine Lichtschranke ist oder diese umfasst.

9. Verfahren zur Steuerung des Transports von Verpackungen (190) in einer Siegeleinrichtung (100), wobei die Siegeleinrichtung (100) eine Siegelstation (180) mit mehreren Aufnahmen (181-183) für Verpackungen, ein stromauf der Siegelstation angeordnetes Übergabeband (130), das Verpackungen an die Siegelstation übergibt, ein stromauf des Übergabebandes angeordnetes Transportband (120), das Verpackungen transportiert und an das Übergabeband übergibt, und eine Zuführeinrichtung (110), die Verpackungen dem Transportband zuführt, umfasst, wobei das Transportband und das Übergabeband unabhängig voneinander antreibbar sind und wobei die Siegeleinrichtung wenigstens einen Sensor (161), der einen Abstand von nacheinander transportierten Verpackungen in der Zuführeinrichtung bestimmt, und eine Steuereinheit (150) umfasst, **dadurch gekennzeichnet, dass** das Verfahren umfasst, dass die Steuereinheit ein Geschwindigkeitsprofil des Transportbandes und ein Geschwindigkeitsprofil des Übergabebandes basierend auf einem von dem Sensor gemessenen Abstand nacheinander transportierter Verpackungen bestimmt und das Transportband und das Übergabeband abhängig von dem Geschwindigkeitsprofil so steuert, dass der Abstand von nacheinander folgenden Verpackungen bei einer Übergabe an die Siegelstation dem Abstand benachbarter Aufnahmen für Verpackungen entspricht.

10. Verfahren nach Anspruch 9, wobei die Siegeleinrichtung (100) einen zweiten Sensor (162) umfasst, der einen Abstand von nacheinander transportierten Verpackungen in dem Transportband (120) bestimmt, wobei die Steuereinheit (150) abhängig von dem von dem Sensor gemessenen Abstand und von dem von dem zweiten Sensor (162) gemessenen Abstand ein Geschwindigkeitsprofil des Übergabebandes (130) bestimmt (233) und das Übergabeband abhängig von dem Geschwindigkeitsprofil steuert (250).

**11.** Verfahren nach Anspruch 10, wobei die Steuereinheit (150) abhängig von dem von dem Sensor (161) gemessenen Abstand nacheinander transportierter Verpackungen in der Zuführeinrichtung (110) bestimmt, ob ein für das Übergabeband bestimmtes Geschwindigkeitsprofil bei konstanter Geschwindigkeit des Transportbandes einen Schwellwert für die Bewegung des Übergabebandes überschreitet.

**12.** Verfahren nach Anspruch 11, wobei die Steuereinheit (150) die Geschwindigkeitsprofile des Transportbandes (120) und des Übergabebandes (130) abhängig von dem von dem Sensor (161) gemessenen Abstand nacheinander transportierter Verpackungen in der Zuführeinrichtung (110) so bestimmt (241), dass der Schwellwert der Bewegung des Übergabebandes nicht überschritten wird.

**13.** Verfahren nach Anspruch 11 oder 12, wobei der Schwellwert eine maximale Verzögerung und/oder eine maximale Beschleunigung des Übergabebandes (130) angibt.

**14.** Verfahren nach einem der Ansprüche 9 bis 13, wobei das Geschwindigkeitsprofil des Transportbandes (120) und/oder das Geschwindigkeitsprofil des Übergabebandes (130) einen oder mehrere Parameter betreffend eine Beschleunigung, eine Verzögerung, eine Beschleunigungsdauer, eine Verzögerungsdauer, eine Transportgeschwindigkeit, eine Dauer für die die Transportgeschwindigkeit beibehalten wird, umfasst.

**15.** Verfahren nach einem der Ansprüche 9 bis 14, wobei die Steuereinheit (150) die Bewegung des Übergabebandes (130) und des Transportbandes (120) basierend auf den Geschwindigkeitsprofilen so steuert, dass sich das Transportband und das Übergabeband zumindest dann, wenn eine Verpackung von dem Transportband an das Übergabeband übergeben wird, mit gleicher Geschwindigkeit bewegen.

**Claims**

**1.** Sealing device (100) for sealing packages (190), the sealing device comprising a sealing station (180) with a plurality of receptacles (181-183) for packages, a transfer belt (130) arranged upstream of the sealing station for transferring packages to the sealing station, a transport belt (120) arranged upstream of the transfer belt for transporting and transferring packages to the transfer belt, and a feeding device (110) for feeding packages to the transport belt, wherein the transport belt and the transfer belt can be driven independently of one another, and wherein the sealing device comprises at least one sensor (161), which is adapted to determine a distance between successively transported packages in the feeding device (110), and a control unit (150), **characterized in that** the control unit is adapted to determine a speed profile of the transport belt (120) and a speed profile of the transfer belt (130) based on a distance of successively transported packages measured by the sensor, and to control the transport belt and the transfer belt as a function of the speed profile so that the distance of successive packages during a transfer to the sealing station (180) corresponds to the distance of adjacent receptacles for packages.

**2.** Sealing device (100) according to claim 1, wherein the sealing device comprises a second sensor (162) which is adapted to determine a distance of successively transported packages in the transport belt (120), wherein the control unit (150) is adapted to determine a speed profile of the transfer belt (130) depending on the distance measured by the sensor (161) and on the distance measured by the second sensor (162) and to control the transfer belt as a function of the speed profile.

**3.** Sealing device (100) according to claim 2, wherein the control unit (150) is adapted to determine, depending on the distance of successively transported packages in the feeding device (110) measured by the sensor (161), whether a speed profile determined for the transfer belt (130) exceeds a threshold value for the movement of the transfer belt at constant speed of the transport belt (120).

**4.** Sealing device (100) according to claim 3, wherein the control unit (150) is adapted to determine the speed profiles of the transport belt (120) and the transfer belt (130) depending on the distance of successively transported packages in the feeding device (110) measured by the sensor (161) such that the threshold value of the movement of the transfer belt is not exceeded.

**5.** Sealing device (100) according to claim 3 or 4, wherein the threshold value indicates a maximum deceleration and/or a maximum acceleration of the transfer belt (130).

**6.** Sealing device (100) according to one of claims 1 to 5, wherein the speed profile of the transport belt (120) and/or the speed profile of the transfer belt (130) comprises one or more parameters concerning an acceleration, a deceleration, an acceleration duration, a deceleration duration, a transport speed, a duration for which the transport speed is maintained.

7. Sealing device (100) according to one of claims 1 to 5, wherein the control unit (150) is adapted to control the movement of the transfer belt (130) and the transport belt (120) based on the speed profiles such that the transport belt and the transfer belt move at the same speed at least when a package is transferred from the transport belt to the transfer belt.

8. Sealing device (100) according to any one of claims 1 to 7, wherein the sensor and/or the second sensor is or comprises a light barrier.

9. A method for controlling the transport of packages (190) in a sealing device (100), wherein the sealing device (100) comprises a sealing station (180) with a plurality of receptacles (181-183) for packages, a transfer belt (130) arranged upstream of the sealing station, which transfers packages to the sealing station, a transport belt (120) arranged upstream of the transfer belt, which transports packages and transfers them to the transfer belt, and a feeding device (110), which feeds packages to the transport belt, wherein the transport belt and the transfer belt can be driven independently of one another, and wherein the sealing device comprises at least one sensor (161), which determines a distance between successively transported packages in the feeding device, and a control unit (150), **characterized in that** the method comprises that the control unit determines a speed profile of the transport belt and a speed profile of the transfer belt based on a distance of successively transported packages measured by the sensor and controls the transport belt and the transfer belt as a function of the speed profile such that the distance of successive packages during a transfer to the sealing station corresponds to the distance of adjacent receptacles for packages.

10. Method according to claim 9, wherein the sealing device (100) comprises a second sensor (162) which determines a distance of successively transported packages in the transport belt (120), wherein the control unit (150) determines (233) a speed profile of the transfer belt (130) depending on the distance measured by the sensor and on the distance measured by the second sensor (162) and controls (250) the transfer belt as a function of the speed profile.

11. Method according to claim 10, wherein the control unit (150) determines, depending on the distance of successively transported packages in the feeding device (110) measured by the sensor (161), whether a speed profile determined for the transfer belt exceeds a threshold value for the movement of the transfer belt at constant speed of the transport belt.

12. Method according to claim 11, wherein the control unit (150) determines (241) the speed profiles of the transport belt (120) and the transfer belt (130) depending on the distance of successively transported packages in the feeding device (110) measured by the sensor (161) such that the threshold value of the movement of the transfer belt is not exceeded.

13. Method according to claim 11 or 12, wherein the threshold value indicates a maximum deceleration and/or a maximum acceleration of the transfer belt (130).

14. Method according to one of claims 9 to 13, wherein the speed profile of the transport belt (120) and/or the speed profile of the transfer belt (130) comprises one or more parameters concerning an acceleration, a deceleration, an acceleration duration, a deceleration duration, a transport speed, a duration for which the transport speed is maintained.

15. Method according to one of claims 9 to 14, wherein the control unit (150) controls the movement of the transfer belt (130) and the transport belt (120) based on the speed profiles such that the transport belt and the transfer belt move at the same speed at least when a package is transferred from the transport belt to the transfer belt.

**Revendications**

1. Dispositif de scellage (100) pour sceller des emballages (190), le dispositif de scellage comprenant un poste de scellage (180) avec plusieurs logements (181-183) pour des emballages, une bande de transfert (130) agencée en amont du poste de scellage pour transférer des emballages au poste de scellage, une bande de transport (120) agencée en amont de la bande de transfert pour transporter et transférer des emballages à la bande de transfert, et un dispositif d'alimentation (110) pour alimenter des emballages à la bande de transport, dans lequel la bande de transport et la bande de transfert peuvent être entraînées indépendamment l'une de l'autre, et dans lequel le dispositif de scellage comprend au moins un capteur (161) qui est conçu pour déterminer une distance entre des emballages transportés successivement dans le dispositif d'alimentation (110), et une unité de commande (150), **caractérisé en ce que** l'unité de commande est conçue pour déterminer un profil de vitesse de la bande de transport (120) et un profil de vitesse de la bande de transfert (130) sur la base d'une distance mesurée par le capteur entre des emballages transportés successivement, et pour commander la bande de transport et la bande de transfert en fonction du profil de vitesse de telle sorte que la distance entre des emballages successifs lors du transfert au poste de scellage (180) corresponde à la distance entre des logements adjacents pour des emballages.

2. Dispositif de scellage (100) selon la revendication 1, dans lequel le dispositif de scellage comprend un second capteur (162) qui est conçu pour déterminer une distance entre des emballages transportés successivement dans la bande de transport (120), dans lequel l'unité de commande (150) est conçue pour déterminer un profil de vitesse de la bande de transfert (130) en fonction de la distance mesurée par le capteur (161) et de la distance mesurée par le second capteur (162), et pour commander la bande de transfert en fonction du profil de vitesse.

3. Dispositif de scellage (100) selon la revendication 2, dans lequel l'unité de commande (150) est conçue pour déterminer, en fonction de la distance mesurée par le capteur (161) entre des emballages transportés successivement dans le dispositif d'alimentation (110), si un profil de vitesse déterminé pour la bande de transfert (130) dépasse une valeur de seuil pour le déplacement de la bande de transfert à une vitesse constante de la bande de transport (120).

4. Dispositif de scellage (100) selon la revendication 3, dans lequel l'unité de commande (150) est conçue pour déterminer les profils de vitesse de la bande de transport (120) et de la bande de transfert (130) en fonction de la distance mesurée par le capteur (161) entre des emballages transportés successivement dans le dispositif d'alimentation (110) de telle sorte que la valeur de seuil du déplacement de la bande de transfert ne soit pas dépassée.

5. Dispositif de scellage (100) selon la revendication 3 ou 4, dans lequel la valeur de seuil indique une décélération maximale et/ou une accélération maximale de la bande de transfert (130).

6. Dispositif de scellage (100) selon l'une quelconque des revendications 1 à 5, dans lequel le profil de vitesse de la bande de transport (120) et/ou le profil de vitesse de la bande de transfert (130) comprend un ou plusieurs paramètres concernant une accélération, une décélération, une durée d'accélération, une durée de décélération, une vitesse de transport, une durée pendant laquelle la vitesse de transport est maintenue.

7. Dispositif de scellage (100) selon l'une quelconque des revendications 1 à 5, dans lequel l'unité de commande (150) est conçue pour commander le déplacement de la bande de transfert (130) et de la bande de transport (120) sur la base des profils de vitesse de telle sorte que la bande de transport et la bande de transfert se déplacent à la même vitesse au moins lorsqu'un emballage est transféré de la bande de transport à la bande de transfert.

8. Dispositif de scellage (100) selon l'une quelconque des revendications 1 à 7, dans lequel le capteur et/ou le second capteur est ou comprend une barrière photoélectrique.

9. Procédé pour commander le transport d'emballages (190) jusque dans un dispositif de scellage (100), dans lequel le dispositif de scellage (100) comprend un poste de scellage (180) avec plusieurs logements (181-183) pour des emballages, une bande de transfert (130) agencée en amont du poste de scellage, qui transfère des emballages au poste de scellage, une bande de transport (120) agencée en amont de la bande de transfert, qui transporte des emballages et les transfère à la bande de transfert, et un dispositif d'alimentation (110) qui alimente les emballages à la bande de transport, dans lequel la bande de transport et la bande de transfert peuvent être entraînées indépendamment l'une de l'autre et dans lequel le dispositif de scellage comprend au moins un capteur (161) qui détermine une distance entre des emballages transportés successivement dans le dispositif d'alimentation, et une unité de commande (150), **caractérisé en ce que** l'unité de commande détermine un profil de vitesse de la bande de transport et un profil de vitesse de la bande de transfert sur la base d'une distance mesurée par le capteur entre des emballages transportés successivement, et commande la bande de transport et la bande de transfert en fonction du profil de vitesse de sorte que la distance entre des emballages successifs lors d'un transfert au poste de scellage corresponde à la distance entre des logements adjacents pour des emballages.

10. Procédé selon la revendication 9, dans lequel le dispositif de scellage (100) comprend un second capteur (162) qui détermine une distance entre des emballages transportés successivement dans la bande de transport (120), dans lequel l'unité de commande (150) détermine (233) un profil de vitesse de la bande de transfert (130) en fonction de la distance mesurée par le capteur et de la distance mesurée par le second capteur (162), et commande (250) la bande de transfert en fonction du profil de vitesse.

11. Procédé selon la revendication 10, dans lequel l'unité de commande (150) détermine, en fonction de la distance mesurée par le capteur (161) entre des emballages transportés successivement dans le dispositif d'alimentation (110), si un profil de vitesse déterminé pour la bande de transfert dépasse une valeur de seuil pour le déplacement de la bande de transfert à une vitesse constante de la bande de transport.

12. Procédé selon la revendication 11, dans lequel l'unité de commande (150) détermine (241) les profils de vitesse de la bande de transport (120) et de la bande de transfert (130) en fonction de la distance mesurée par le capteur (161) entre des emballages transportés successivement dans le dispositif d'alimentation (110) de telle sorte que la valeur de seuil du déplacement de la bande de transfert ne soit pas dépassée.

13. Procédé selon la revendication 11 ou 12, dans lequel la valeur de seuil indique une décélération maximale et/ou une accélération maximale de la bande de transfert (130).

14. Procédé selon l'une quelconque des revendications 9 à 13, dans lequel le profil de vitesse de la bande de transport (120) et/ou le profil de vitesse de la bande de transfert (130) comprend un ou plusieurs paramètres concernant une accélération, une décélération, une durée d'accélération, une durée de décélération, une vitesse de transport, une durée pendant laquelle la vitesse de transport est maintenue.

15. Procédé selon l'une quelconque des revendications 9 à 14, dans lequel l'unité de commande (150) commande le déplacement de la bande de transfert (130) et de la bande de transport (120) sur la base des profils de vitesse de telle sorte que la bande de transport et la bande de transfert se déplacent à la même vitesse au moins lorsqu'un emballage est transféré de la bande de transport à la bande de transfert.

FIG. 1

EP 4 032 817 B1

```
                                    201
                                     ⌐
                          ┌─────────────────────────┐
                          │ Abstand in Zuführeinrichtung │
                          └─────────────────────────┘
               202                       │
                ⌐                        ▼
  ┌──────┐   ┌┄┄┄┄┄┄┄┄┄┄┄┄┄┄┄┄┄┄┄┄┄┄┄┐   ┌──────┐
  │  Ja  │◄──┆ Abstand größer als Schwellwert? ┆──►│ Nein │
  └──────┘   └┄┄┄┄┄┄┄┄┄┄┄┄┄┄┄┄┄┄┄┄┄┄┄┘   └──────┘
     241        │                              231        │
      ⌐         ▼                               ⌐         ▼
 ┌──────────────────────────┐          ┌──────────────────────────┐
 │ Bestimmen Geschwindigkeitsprofil │   │ Geschwindigkeitsprofil    │
 │ Transportband und Übergabeband │    │ Transportband konstant    │
 └──────────────────────────┘          └──────────────────────────┘
         ╱           ╲                       232        │
        ╱             ╲                       ⌐         ▼
  242  ╱               ╲  243           ┌──────────────────────────┐
   ⌐  ╱                 ╲  ⌐            │ Abstand in Transportband  │
 ┌┄┄┄┄┄┄┄┄┄┄┄┄┄┄┄┐  ┌┄┄┄┄┄┄┄┄┄┄┄┄┄┄┄┐   └──────────────────────────┘
 ┆ Schwellwert Übergabeband ┆  ┆ Schwellwert Transportband ┆    233        │
 └┄┄┄┄┄┄┄┄┄┄┄┄┄┄┄┘  └┄┄┄┄┄┄┄┄┄┄┄┄┄┄┄┘     ⌐         ▼
        ╲               ╱              ┌──────────────────────────┐
         ╲             ╱               │ Bestimmen Geschwindigkeitsprofil │
 244⌐  ┌┄┄┄┄┄┄┄┄┄┄┄┄┄┄┄┐               │ Übergabeband              │
       ┆ Neubestimmung bis ┆            └──────────────────────────┘
       ┆ Schwellwerte eingehalten ┆                      │
       └┄┄┄┄┄┄┄┄┄┄┄┄┄┄┄┘        250                       │
              │                  ⌐                        │
              ▼    ┌──────────────────────────────────────────┐
                   │ Steuerung Transportband und Übergabeband  │
                   │ entsprechend Geschwindigkeitsprofilen     │◄─┘
                   └──────────────────────────────────────────┘
```

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006030433 A1
- EP 0680880 B1